# EUROPÄISCHE PATENTSCHRIFT

(11) **EP 1 935 711 B1**
(45) Veröffentlichungstag und Bekanntmachung des Hinweises auf die Patenterteilung: **14.04.2010**
(21) Anmeldenummer: 07123199.7
(22) Anmeldetag: 14.12.2007
(51) Int. Cl.: B60N 2/52, F16F 9/02

(54) **Luftfeder für einen Fahrzeugsitz sowie Fahrzeugsitz mit einer derartigen Luftfeder**
Pneumatic spring for an automobile seat and automobile seat with such a pneumatic spring
Ressort pour un siège de véhicule ainsi que siège de véhicule doté d'un tel ressort

(30) Priorität: 18.12.2006 DE 102006059745
(43) Veröffentlichungstag der Anmeldung: 25.06.2008
(73) Patentinhaber: GRAMMER AG, 92224 Amberg (DE)
(72) Erfinder: Haller, Erwin, 92262 Birgland (DE)
(74) Vertreter: Hannke, Christian

(56) Entgegenhaltungen:
- EP-A- 1 484 205
- DE-A1- 3 517 503
- DE-A1- 3 517 504
- DE-A1- 3 517 505
- DE-A1- 19 803 750
- DE-C1- 4 025 183

## Beschreibung

Die Erfindung betrifft eine gemäß dem Oberbegriff des Patentanspruchs 1 ausgebildete Luftfeder für einen Fahrzeugsitz sowie Fahrzeugsitz mit einer derartigen Luftfeder. Eine solche Luftfeder ist aus der DE-A-19 803 750 bekannt.

Bekannte Luftfedersystem dieser Art haben üblicherweise ein von der Luftfeder getrenntes Steuerelement (Ventilsteuerung), welches der Regelung der Zu- bzw. Abluftmenge dient. Diese Steuerung dient zum einen der Luftmenge in der Luftfeder, um die/das entsprechende Auflast/Gewicht des Sitzes zu tragen, und zum anderen der Veränderung der Sitzhöhe, um diese individuell der Körpergröße anpassen zu können. Bei den bekannten Gestaltungen dieser Art erfordert der luftgefederte Fahrersitz als Baugruppe eine Luftfeder, eine Steuereinheit (Niveau-Steuereinheit und Höhen-Steuereinheit), zumindest eine Verbindungsleitung zwischen der Luftfeder und der Steuereinheit sowie eine Versorgungsleitung.

Beispielhafte bekannte Gestaltungen sind in der DE 40 25 183 C2, der DE 35 17 503 C2, der DE 35 17 504 C2 oder der DE 35 17 505 C2 oder der DE 199 02 224 C1 offenbart.

Der Erfindung liegt nun die Aufgabe zugrunde, eine baulich einfache und kompakte, kostengünstige Möglichkeit für eine Fahrzeugsitzfederung mit Verstellmöglichkeit zu schaffen.

Erfindungsgemäß wird eine Luftfeder für einen Fahrzeugsitz gemäß Patentanspruch 1 vorgeschlagen. Ein erfindungsgemäßer Fahrzeugsitz ist Gegenstand des Patentanspruchs 7. Bevorzugte Weiterbildungen sind Gegenstand der Unteransprüche.

Es wird insbesondere eine Luftfeder für einen Fahrzeugsitz vorgeschlagen. Die Luftfeder weist mehrere wenigstens eine Luftfederkammer begrenzende Luftfeder-Bauteile auf. Zur Höhen- und/oder Niveausteuerung des Fahrzeugsitzes bildet die Luftfeder einen Zuluftanschluss und einen Abluftanschluss aus.

Ferner weist die Luftfeder zur Höhen- und/oder Niveausteuerung des Fahrzeugsitzes eine Ventileinrichtung auf, die in wenigstens einem Luftfeder-Bauteil integriert ist. Das betreffende Luftfeder-Bauteil ist vorzugsweise ein Kolbenunterteil oder ein Kolbenoberteil oder ein Zylinderunterteil oder ein Zylinderoberteil der Luftfeder.

Ferner wird ein Fahrzeugsitz mit einer derartigen Luftfeder vorgeschlagen. Der Fahrzeugsitz kann beispielsweise ein Scherensystem bzw. Scherengestell aufweisen, das beispielsweise derart ausgestaltet sein kann, wie es in der DE 40 25 183 C1 oder der DE 35 17 504 C2 oder der DE 35 17 505 C2 oder der DE 199 02 224 C1 offenbart ist. Darauf wird ausdrücklich im Hinblick auf bevorzugte Weiterbildungen der vorliegenden Offenbarung Bezug genommen, wobei die entsprechenden Offenbarungsstellen hiermit durch Bezugnahme zum Gegenstand der vorliegenden Offenbarung gemacht werden. Der Fahrzeugsitz kann beispielsweise ein Traktorsitz, ein Lastkraftwagen- oder ein NKW-Sitz oder ein Sitz eines Busses, und zwar jeweils insbesondere ein Fahrersitz, sein.

Es ist insbesondere vorgesehen, dass sämtliche Funktionen zur Regelung der Federung im Kolbenunterteil bzw. im Kolbenoberteil oder im Zylinderoberteil bzw. Zylinderunterteil integriert sind. Dies ist insbesondere derart, dass ein Modul gebildet wird.

Dabei kann vorgesehen sein, dass dieses Modul eine Niveausteuerwalze, einen Niveausteuerhebel, eine Höhenverstell-Steuerwalze sowie eine Schnellabsenkung aufweist oder hieraus besteht.

Es kann vorgesehen sein, dass die Niveauregulierung über eine im Kolbenunterteil und/oder im Kolbenoberteil bzw. im Zylinderoberteil und/oder Zylinderunterteil angebrachte Steuerwalze, Steuerscheibe oder dergleichen erfolgt, die in vorteilhafter Gestaltung bei Verdrehung die Zuluft- oder Abluftkanäle freigibt bzw. schließt.

Ferner kann ein Niveausteuerhebel vorgesehen sein. Ein solcher Niveausteuerhebel kann dabei die Verbindung eines Scherensystems mit der Niveausteuerwalze sein. Es kann vorgesehen sein, dass die Übertragung der Einleitung auf die Niveausteuerwalze durch den Steuerhebel mit einer durch ein Trägheitselement bestimmten Maximalgeschwindigkeit (Frequenz) erfolgt, welche weit unter den üblichen Schwingungsfrequenzen liegt.

Ferner kann ein Dämpfungselement bzw. ein Honigmotor vorgesehen sein. Durch ein Dämpfungselement ("Honigmotor"), welches die maximale Verdrehgeschwindigkeit der Steuerwalze bestimmt, wird eine frequenzabhängige Niveaukorrektur ermöglicht, wodurch eine "nicht notwendige" Nachregelung des Niveaus unterbunden wird. Die Trägheit (Schaltfrequenz) eines solchen Dämpfungselements liegt in zweckmäßiger Gestaltung unterhalb der typischen Betriebsfrequenzen des Systems (z.B. 0,5 Hz).

In besonders zweckmäßiger Ausgestaltung wird bei gleichmäßigen Schwingungseinleitungen (z.B. 0,5 Hz) um den Niveaubereich aufgrund des in vorteilhafter Weiterbildung vorgesehenen gefederten Freilaufs ein Nachregeln (Zu- / Abluft) unterbunden, d.h. das Niveausteuersystem bleibt geschlossen, die Bewegung der Schwinge setzt sich allein im Freilauf um.

Es kann vorgesehen sein, dass ein bzw. das Dämpfungselement bei länger anhaltenden Symmetrieabweichungen zur Nulllinie (Niveau) ein langsames Nachlaufen der Steuerwalze zulässt und hiermit die Einlass- bzw. Auslassquerschnitte zur Korrektur des Niveaus freigibt.

Es kann vorgesehen sein, dass die Steuerwalze bei längerer oder dauerhafter Abweichung von der Nulllinie (Niveau) in der maximalen Geschwindigkeit nachläuft und die Steuerbohrungen für Zu- oder Abluft freigibt (Fahrerwechsel, Gewichtsanpassung).

Ferner kann vorgesehen sein, dass die Zu- bzw. Abluftmenge hierbei über einen sich verändernden Querschnitt in der Niveauwalze der Fehlstellung angepasst wird (z.B. große Abweichung = großer Querschnitt).

In vorteilhafter Gestaltung ist vorgesehen, dass zur Veränderung der Sitzhöhe die bzw. eine HV-Steuerwalze in Relation bzw. relativ zur bzw. zu einer Niveauwalze verdreht wird, was zu einer vermeintlichen (gewünschten) Fehlstellung der Niveauwalze führt bzw. führen kann, die danach beispielsweise derart korrigiert werden kann, dass eine gewünschte Höhenanpassung bewirkt wird bzw. die Folge ist. In vorteilhafter Gestaltung erfolgt die genaue Höhenkorrektur erst im dynamischen Bereich (z.B. permanente Überschreitung der Position in einer Richtung).

Die Ansteuerung der HV-Steuerwalze kann beispielsweise über einen Bowdenzug oder ein anders gestaltetes Ansteuerelement erfolgen; die Rückstellung erfolgt vorzugsweise über eine Zugfeder.

In vorteilhafter Gestaltung wird eine Schnellabsenkung ermöglicht. Die Schnellabsenkung (SA) erfolgt in vorteilhafter Gestaltung über einen zweiten Hebel (Taste), welche den HV-Bowdenzug über einen Freilauf bedient. Durch Verdrehen der HV-Walze (HV maximal unten) wird eine Abweichung von zu weit oben vorgegeben, die Korrektur erfolgt mit maximalem Strömungsquerschnitt nach unten; es kann vorgesehen sein, dass beim Lösen der Schnellabsenkung die Niveaufindung (ebenfalls) schnellstmöglich erfolgt. Insbesondere kann vorgesehen sein, dass die Korrekturgeschwindigkeit aufgrund des sich ändernden Querschnitts bei Annäherung an die HV-Position (Niveau) verlangsamt wird.

Die Schnellabsenkung könnte auch ebenso über die HV-Vorwahl erfolgen, wobei allerdings die vorherige HV-Position neu angewählt werden müsste.

Anhand der Figuren sollen im Folgenden Ausführungsbeispiele der Erfindung näher erläutert werden. Dabei zeigen:
- Fig. 1: eine erste beispielhafte erfindungsgemäße Ausführungsform in teilweiser, schematischer Explosionsansicht;
- Fig. 2: eine zweite beispielhafte erfindungsgemäße Ausführungsform in teilweiser, schematischer Explosionsansicht;
- Fig. 3 - Fig. 6: verschiedene Ansichten des Kolbenunterteils bzw. Zylinderunterteils der in den Fig. 1 und 2 gezeigten Gestaltungen;
- Fig. 7 - Fig. 12: verschiedene Ansichten der Höhensteuerwalze bzw. des HV-Moduls der in den Fig. 1 und 2 gezeigten Gestaltungen;
- Fig. 13 - Fig. 24: verschiedene Ansichten der Niveausteuerwalze bzw. Niveausteuerung der in den Fig. 1 und 2 gezeigten Gestaltungen;
- Fig. 25 - Fig. 29: verschiedene Ansichten des HV-Hebels der in den Fig. 1 und 2 gezeigten Gestaltungen;
- Fig. 30 - Fig. 32: verschiedene Ansichten des Dämpfers bzw. Frequenzreglers bzw. "Honigmotors" der in den Fig. 1 und 2 gezeigten Gestaltungen;
- Fig. 33 - Fig. 37: verschiedene Ansichten des Mitnehmers der in Fig. 1 gezeigten Gestaltung;
- Fig. 38 - Fig. 43: verschiedene Ansichten des Ventil-Hebels der in Fig. 1 gezeigten Gestaltung;
- Fig. 44 - Fig. 47: verschiedene Ansichten des Antriebsrades der in Fig. 2 gezeigten Gestaltung;

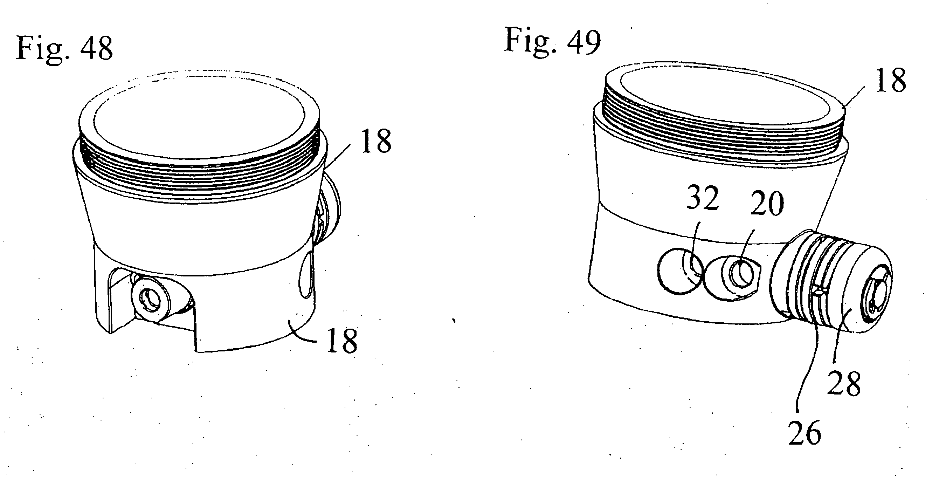

- Fig. 48 - Fig. 49: 3-D-Ansichten der Gestaltung gemäß Fig. 1 bzw. gemäß Fig. 2;
- Fig. 50 - Fig. 56: verschiedene Stellungen der Gestaltung gemäß Fig. 1 bzw. gemäß Fig. 2 in jeweils teilgeschnittener Ansicht und als vergrößerter Ausschnitt aus der jeweiligen teilgeschnittenen Ansicht;
- Fig. 57 a) - c): eine weitere Ansicht der erfindungsgemäßen Gestaltung mit zwei Schnitten die eine Stellung der erfindungsgemäßen Gestaltung verdeutlichen; und
- Fig. 58 a) - e),:
- Fig. 59 a) - e),:
- Fig. 60 a) - e),:
- Fig. 61 a) - e) u.:

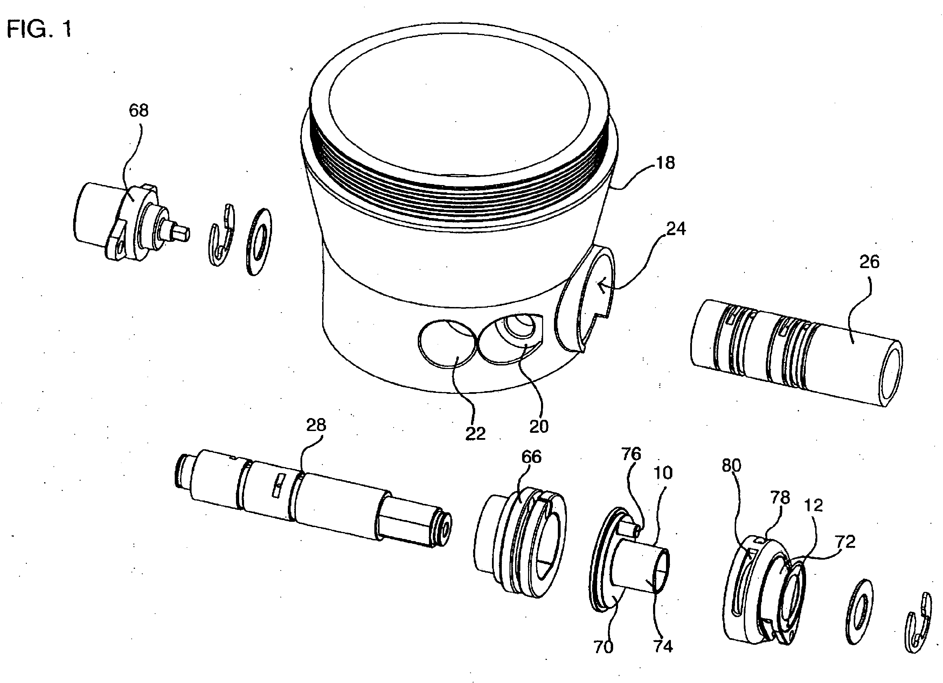

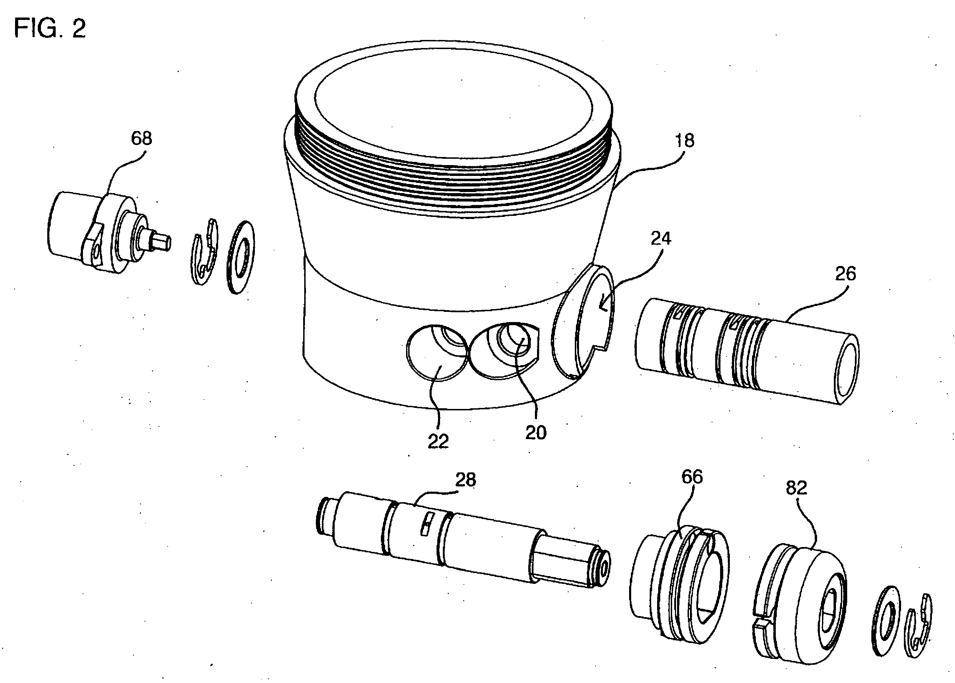

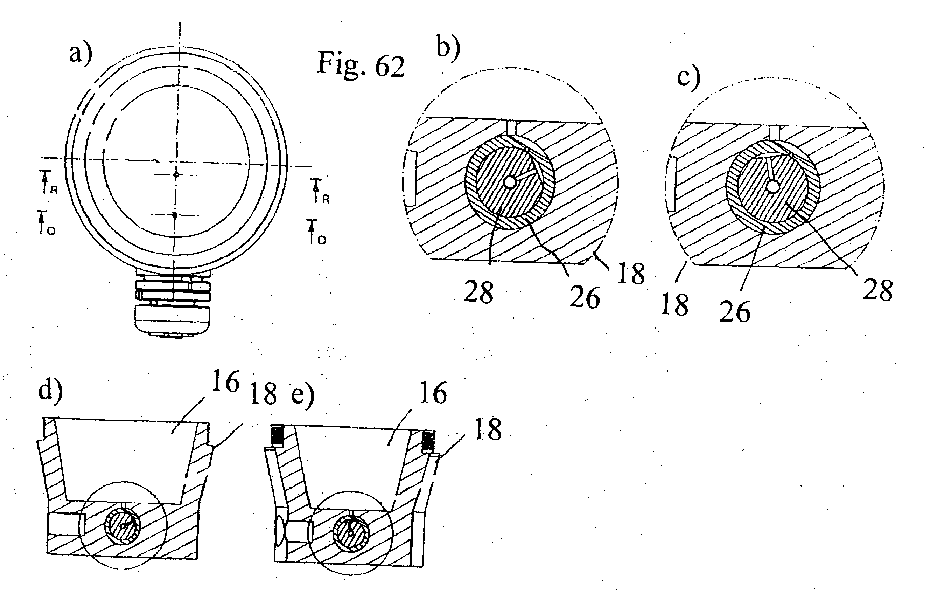

- Fig. 62 a) - e): verschiedene Stellungen der Gestaltung gemäß Fig. 1 bzw. gemäß Fig. 2, und zwar in jeweils fünf Ansichten.

Fig. 1 zeigt eine erste beispielhafte erfindungsgemäße Luftfeder 1 für die Federung sowie Verstellung, insbesondere Höhen- und/oder Niveausteuerung, von luftgefederten Fahrzeugsitzen in teilweiser, schematischer Explosionsansicht, wobei die Gestaltung gemäß Fig. 1 einen integrierten Freilauf aufweist.

Fig. 2 zeigt eine zweite beispielhafte erfindungsgemäße Luftfeder 1 für die Federung sowie Verstellung, insbesondere Höhen- und/oder Niveausteuerung, von luftgefederten Fahrzeugsitzen in teilweiser, schematischer Explosionsansicht, wobei die Verstellvorrichtung gemäß Fig. 2 einen externen Freilauf aufweist.

Die in den Figuren 1 und 2 gezeigten Luftfedern 1 unterscheiden sich also insbesondere dadurch, dass bei der in Fig. 1 gezeigten Luftfeder 1 ein Mitnehmer 10 und ein Ventilhebel 12 sowie eine nicht dargestellte Drehfeder vorgesehen ist, während stattdessen bei der Gestaltung gemäß Fig. 2 ein Antriebsrad 14 vorgesehen ist.

Ungeachtet dessen unterscheiden sich die in den Figuren 1 und 2 gezeigten Gestaltungen im Wesentlichen nicht voneinander, so dass die Beschreibung insofern für beide Gestaltungen gemeinsam erfolgt.

Die in den Figuren 1 und 2 gezeigten Luftfedern 1 weisen mehrere Luftfeder-Bauteile für die Begrenzung einer mit Luft befüllbaren Luftfederkammer 16 auf, von denen ein Luftfeder-Bauteil 18, das als Kolbenunterteil bzw. Zylinderunterteil gestaltet ist, in den Figuren 1 und 2 gezeigt ist.

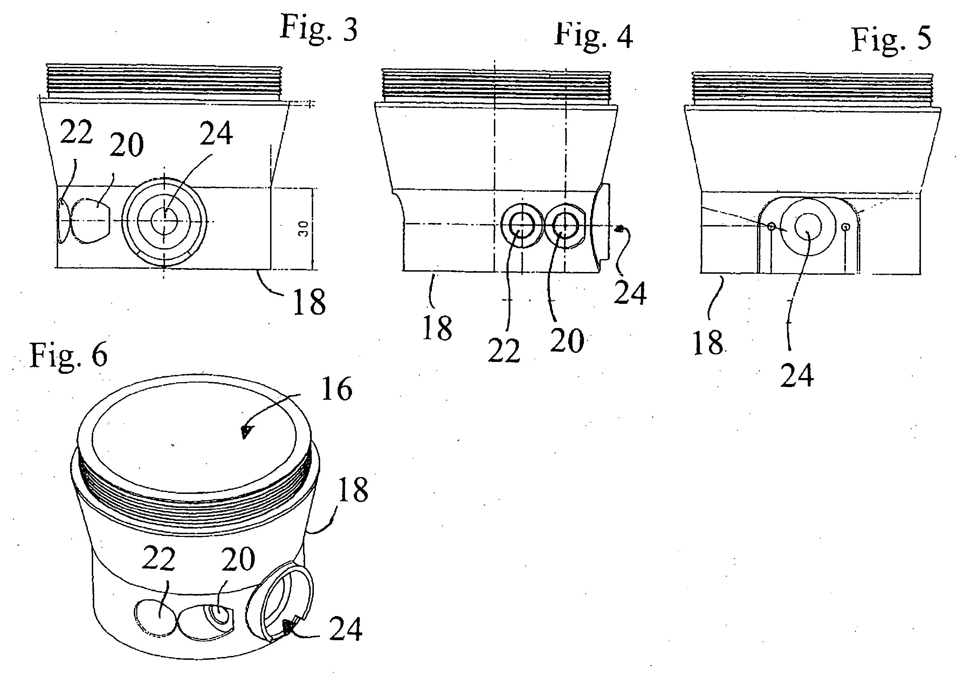

Das Luftfeder-Bauteil 18, das als Einzelteil in verschiedenen Ansichten in den Figuren 3 bis 6 gezeigt ist, weist für die Höhen- und/oder Niveausteuerung des Fahrzeugsitzes einen Zuluftanschluss 20 und einen Abluftanschluss 22 auf. Der Zuluftanschluss 20 erstreckt sich parallel zu diesem Abluftanschluss 22. Quer zu diesem Zuluftanschluss 20 und diesem Abluftanschluss 22 weist das Luftfeder-Bauteil 18 einen Durchgangskanal 24 auf, in den der Zuluftanschluss 20 sowie der Abluftanschluss 22 münden.

Im montierten Zustand erstrecken sich durch bzw. in den Durchgangskanal 24 ein HV-Modul bzw. eine Höhensteuerwalze 26 sowie eine Niveausteuerung bzw. Niveausteuerwalze 28. Das HV-Modul bzw. die Höhensteuerwalze 26 ist hohlzylindrisch gestaltet, so dass in dem HV-Modul bzw. in der Höhensteuerwalze 26 ein Durchgangskanal ausgebildet wird, in welchem die Niveausteuerung bzw. Niveausteuerwalze 28 drehbar aufgenommen ist.

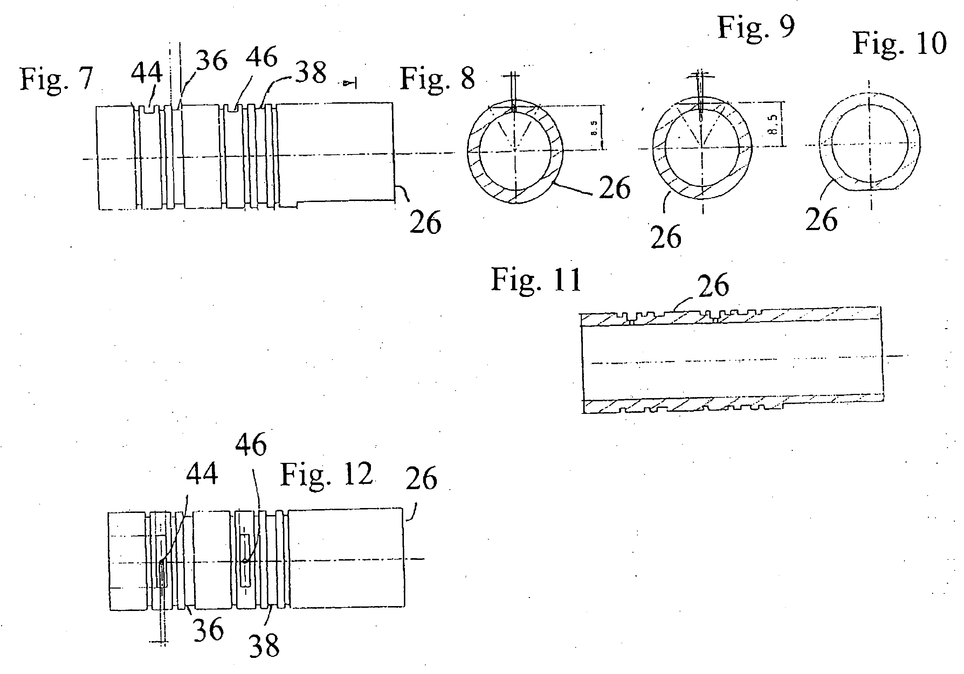

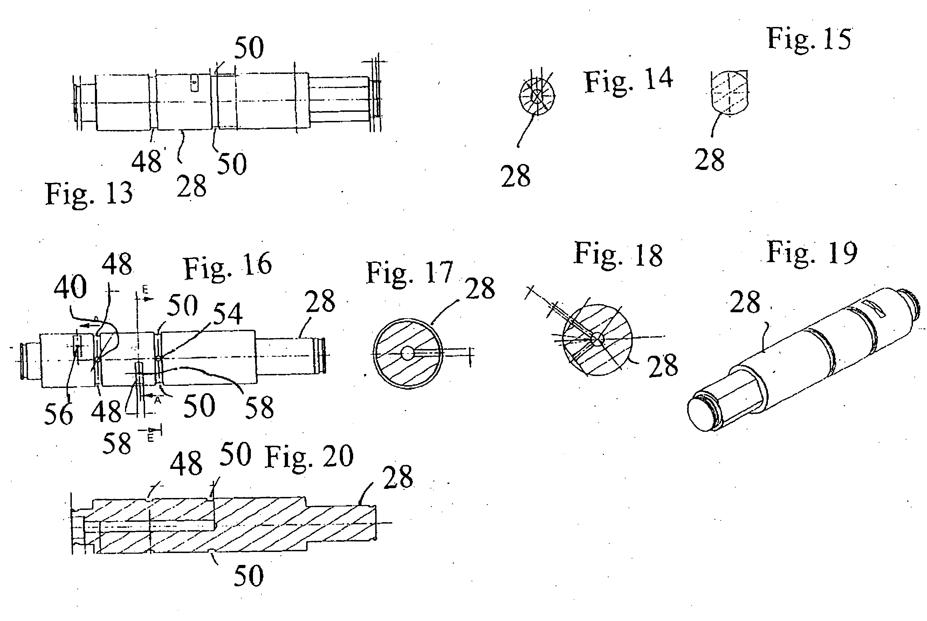

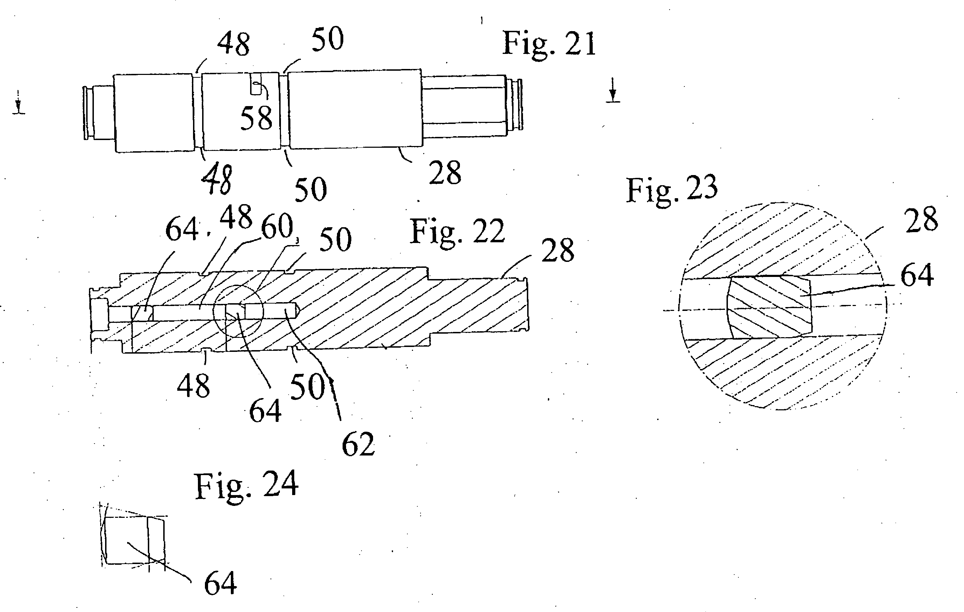

Die Höhensteuerwalze bzw. das HV-Modul 26 ist in verschiedenen Ansichten als Einzelteil in den Figuren 7 bis 12 gezeigt, und die Niveausteuerwalze bzw. Niveausteuerung 28 ist in verschieden Ansichten in den Figuren 13 bis 24 gezeigt.

Im Boden 30 des Luftfeder-Bauteils bzw. Kolbenunterteils bzw. Zylinderunterteils 18 sind - bezüglich der Längsachse des Durchgangskanals 24 - axial versetzt zwei Durchgangsöffnungen 32, 34 vorgesehen, die zur vereinfachten Bezugnahme auch als erste Durchgangsöffnung 32 bzw. zweite Durchgangsöffnung 34 bezeichnet werden und sich vom Innenraum der zur Aufnahme des Feder-Luftvolumens vorgesehen Luftfederkammer 16 zum Durchgangskanal 24 erstrecken.

Die erste Durchgangsöffnung 32 ist für das Abströmen von Luft aus der Luftfederkammer 16 vorgesehen und die zweite Durchgangsöffnung 34 für das Befüllen bzw. Zuströmen von Luft in die Luftfederkammer 16.

Das HV-Modul bzw. die Höhensteuerwalze 26 weist in Ihrem Außenmantel einen ersten Ringkanal 36 für Abluft sowie einen zweiten Ringkanal 38 für Zuluft auf. Im Boden des ersten Ringkanals 36 ist wenigstens eine dritte Durchgangsöffnung 40 vorgesehen, und im Boden des zweiten Ringkanals 38 ist wenigstens eine vierte Durchgangsöffnung 42 vorgesehen.

Axial versetzt (bezogen auf die Axialrichtung des HV-Moduls bzw. der Höhensteuerwalze 26 bzw. der Niveausteuerung bzw. der Niveausteuerwalze 28) zum ersten Ringkanal 36 mit der dritten Durchgangsöffnung 40 erstreckt sich radial durch das HV-Modul bzw. die Höhensteuerwalze 26 eine fünfte Durchgangsöffnung 44, die sich beispielsweise - wie hier radial außen - in Axialrichtung und in Umfangsrichtung (z.B. über ±27,5°) erweitert. Diese fünfte Durchgangsöffnung 44 ist wie die dritte Durchgangsöffnung 40 für Abluft vorgesehen.

Axial versetzt (bezogen auf die Axialrichtung des HV-Moduls bzw. der Höhensteuerwalze 26 bzw. der Niveausteuerung bzw. der Niveausteuerwalze 28) zum zweiten Ringkanal 38 mit der vierten Durchgangsöffnung 42 erstreckt sich radial durch das HV-Modul bzw. die Höhensteuerwalze 26 eine sechste Durchgangsöffnung 46, die sich beispielsweise - wie hier radial außen - in Axialrichtung und in Umfangsrichtung (z.B. über ± 27,5°) erweitert. Diese sechste Durchgangsöffnung 46 ist wie die vierte Durchgangsöffnung 42 für Zuluft vorgesehen.

Die Niveausteuerung bzw. Niveausteuerwalze 28 ist hohl bzw. hohlzylindrisch gestaltet. Die Niveausteuerung bzw. Niveausteuerwalze 28 weist in ihrem Außenmantel einen dritten Ringkanal 48 für Abluft sowie - insbesondere axial versetzt hierzu - einen vierten Ringkanal 50 für Zuluft auf. Vom dritten Ringkanal 48 erstreckt sich eine siebte Durchgangsöffnung 52 in das radial Innere der Niveausteuerung bzw. Niveausteuerwalze 28 und vom vierten Ringkanal 50 erstreckt sich eine achte Durchgangsöffnung 54 in das radial Innere der Niveausteuerung bzw. Niveausteuerwalze 28.

Axial versetzt (bezogen auf die Axialrichtung des HV-Moduls bzw. der Höhensteuerwalze 26 bzw. der Niveausteuerung bzw. der Niveausteuerwalze 28) zum dritten Ringkanal 48 mit der siebten Durchgangsöffnung 52 erstreckt sich radial durch die Niveausteuerung bzw. Niveausteuerwalze 28 eine neunte Durchgangsöffnung 56, die sich beispielsweise - wie hier radial außen - in Axialrichtung und in Umfangsrichtung erweitert. Diese neunte Durchgangsöffnung 56 ist wie die siebte Durchgangsöffnung 52 für Abluft vorgesehen.

Axial versetzt (bezogen auf die Axialrichtung des HV-Moduls bzw. der Höhensteuerwalze 26 bzw. der Niveausteuerung bzw. der Niveausteuerwalze 28) zum vierten Ringkanal 50 mit der achten Durchgangsöffnung 54 erstreckt sich radial durch die Niveausteuerung bzw. Niveausteuerwalze 28 eine zehnte Durchgangsöffnung 58, die sich beispielsweise - wie hier radial außen - in Axialrichtung und in Umfangsrichtung erweitert. Diese zehnte Durchgangsöffnung 58 ist wie die achte Durchgangsöffnung 54 für Zuluft vorgesehen.

Das HV-Modul bzw. die Höhensteuerwalze 26 kann relativ zum Luftfeder-Bauteil bzw. Kolbenunterteil bzw. Zylinderunterteil 18 und relativ zur Niveausteuerung bzw. Niveausteuerwalze 28 verdreht werden. Die Niveausteuerung bzw. Niveausteuerwalze 28 kann relativ zum Luftfeder-Bauteil bzw. Kolbenunterteil bzw. Zylinderunterteil 18 verdreht werden.

Bezogen auf die Axialrichtung des HV-Moduls bzw. der Höhensteuerwalze 26 bzw. der Niveausteuerung bzw. der Niveausteuerwalze 28 sind die erste Durchgangsöffnung 32, die fünfte Durchgangsöffnung 44 und die neunte Durchgangsöffnung 56 axial auf einer Höhe, so dass diese - bei entsprechenden Drehstellungen des HV-Moduls bzw. der Höhensteuerwalze 26 und der Niveausteuerung bzw. Niveausteuerwalze 28 - strömungsverbunden sind.

Bezogen auf die Axialrichtung des HV-Moduls bzw. der Höhensteuerwalze 26 bzw. der Niveausteuerung bzw. der Niveausteuerwalze 28 sind der erster Ringkanal 36, die dritte Durchgangsöffnung 40, der dritte Ringkanal 48 und die siebte Durchgangsöffnung 52 axial auf einer Höhe, so dass diese strömungsverbunden sind.

Bezogen auf die Axialrichtung des HV-Moduls bzw. der Höhensteuerwalze 26 bzw. der Niveausteuerung bzw. der Niveausteuerwalze 28 sind die zweite Durchgangsöffnung 34, die sechste Durchgangsöffnung 46 und die zehnte Durchgangsöffnung 58 axial auf einer Höhe, so dass diese - bei entsprechenden Drehstellungen des HV-Moduls bzw. der Höhensteuerwalze 26 und der Niveausteuerung bzw. Niveausteuerwalze 28 - strömungsverbunden sind.

Bezogen auf die Axialrichtung des HV-Moduls bzw. der Höhensteuerwalze 26 bzw. der Niveausteuerung bzw. der Niveausteuerwalze 28 sind der zweite Ringkanal 38, die vierte Durchgangsöffnung 42, der vierte Ringkanal 50 sowie die achte Durchgangsöffnung 54 axial auf einer Höhe, so dass diese strömungsverbunden sind.

Der Zuluftanschluss 20 mündet in den zweiten Ringkanal 38. Der Abluftanschluss 22 mündet in den ersten Ringkanal 36.

Im Inneren der Niveausteuerung bzw. der Niveausteuerwalze 28 sind die siebte Durchgangsöffnung 52 und die neunte Durchgangsöffnung 56 über eine Abluftkammer 60 strömungsverbunden. Ferner sind im Inneren der Niveausteuerung bzw. der Niveausteuerwalze 28 die achte Durchgangsöffnung 54 und die zehnte Durchgangsöffnung 58 über eine Zuluftkammer 62 strömungsverbunden.

Für die Bildung der Kammern 60, 62 sind Stopfen 64 eingebracht.

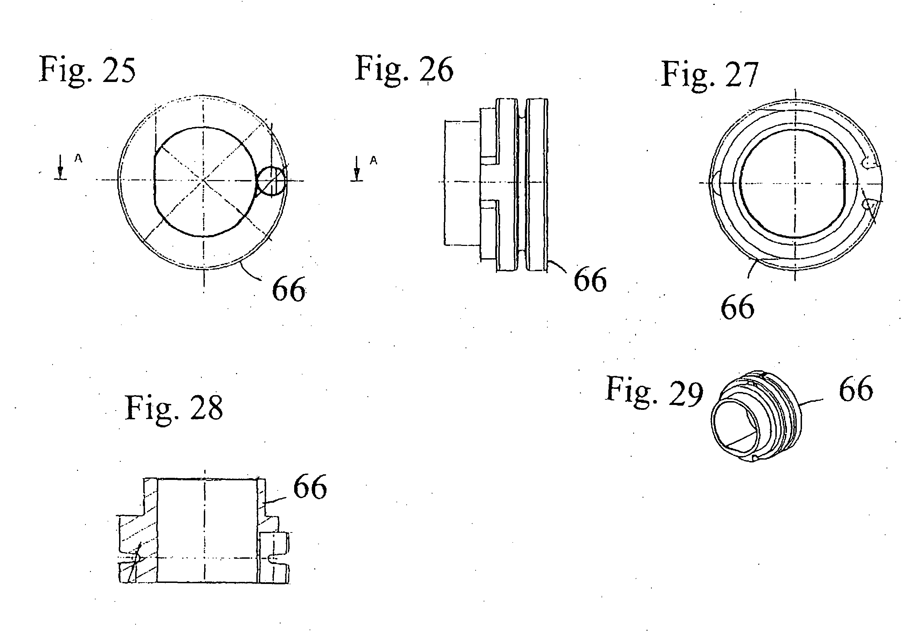

Bei den Gestaltungen gemäß den Figuren 1 und 2 ist ferner ein HV-Hebel 66 gegeben. Dieser HV-Hebel 66 ist drehfest mit der Niveausteuerung bzw. Niveausteuerwalze 28 verbunden. Der HV-Hebel 66 kann drehend bzw. schwenkend betätigt werden, und zwar beispielsweise mittels eines Bowdenzugs. Die Figuren 25 bis 29 zeigen diverse Ansichten des HV-Hebels.

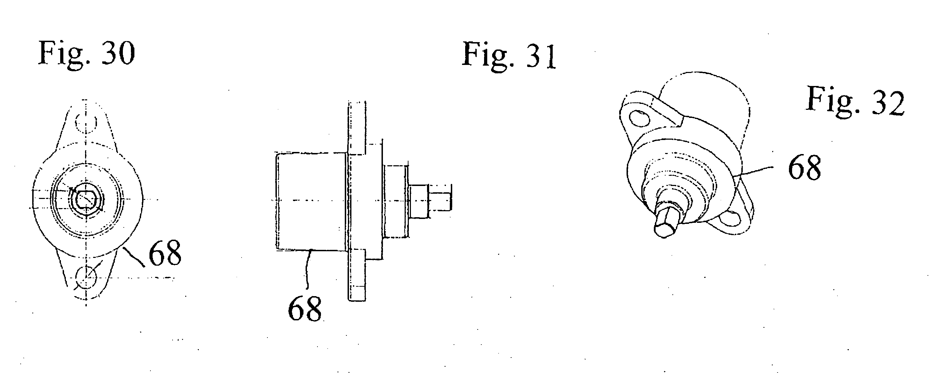

Bei den Gestaltungen gemäß den Figuren 1 und 2 ist ferner ein Dämpfer bzw. Frequenzregler bzw. "Honigmotor" 68 gegen, der mit der Niveausteuerung bzw. bzw. der Niveausteuerwalze 28 gekoppelt ist. Diverse Ansichten dieses Dämpfers bzw. Frequenzreglers bzw. "Honigmotors" 68 sind in den Figuren 30 bis 32 gezeigt.

Bei der Gestaltung gemäß Fig. 1 ist ferner ein Mitnehmer 70 sowie ein Ventilhebel 72 gegeben. Der Mitnehmer 70 ist in dem Ventilhebel 12 mit seinem zentralen Vorsprung 74 eingesteckt. Der Mitnehmer 70 bildet ferner einen exzentrisch angeordneten axialen Vorsprung 76 für das Zusammenwirken mit einer nicht gezeigten Schenkelfeder und einem im Folgenden angesprochenen Steg 78 aus.

Der Ventilhebel weist in seinem Außenmantel einen sich in Umfangsrichtung erstreckenden Schlitz 80 auf, der von dem bereits angesprochenen Steg 78 unterbrochen ist.

Die (nicht gezeigte) Schenkelfeder erstreckt sich um den zentralen Vorsprung 74, wobei ihre Schenkel sowohl den axialen Vorsprung 76 als auch den Steg 78 jeweils derart hintergreifen, dass bei einem Drehmoment zum Verdrehen des Ventilhebels 72 gegenüber dem Mitnehmer 70 die Feder belastet wird, und zwar unabhängig von der Drehrichtung des Drehmoments.

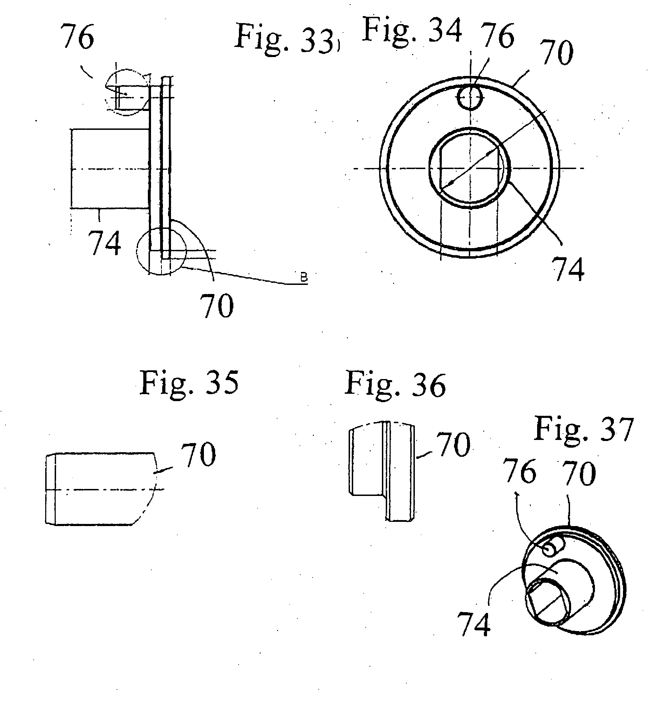

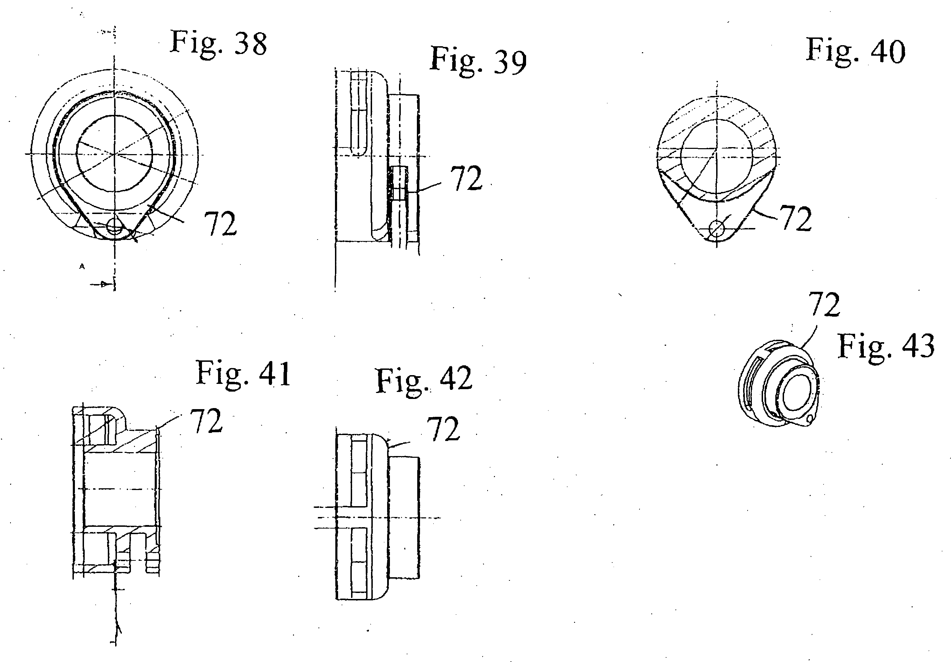

Verschiedene Ansichten des Mitnehmers 70 sind in den Fig. 33 bis 37 gezeigt. Verschiedene Ansichten des Ventilhebels 72 sind in den Figuren 38 bis 43 gezeigt.

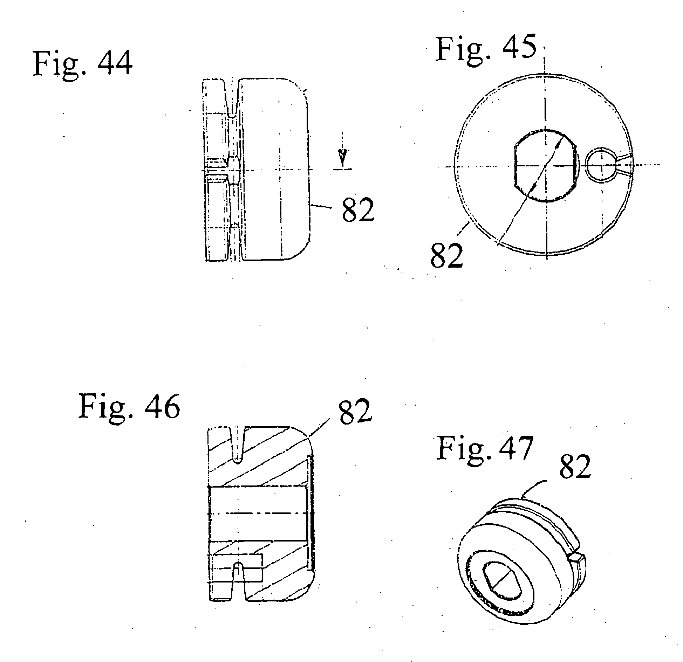

Bei der Gestaltung ist ein Antriebsrad 82 vorgesehen. Statt der Feder, die in Fig. 1 nicht gezeigt, dort aber gegeben ist, kann bei der Gestaltung gemäß Fig. 2 ein Bowdenzug gegeben sein, der in das Antriebsrad eingreift. Verschiedene Ansichten des Antriebsrades 82 sind in den Figuren 44 bis 47 gezeigt.

Es wird insbesondere durch ein Ventil ausgebildet, dessen Stellungen insbesondere durch Verdrehen des HV-Moduls bzw. der Höhensteuerwalze 26 und der Niveausteuerung bzw. Niveausteuerwalze 28 einstellbar sind.

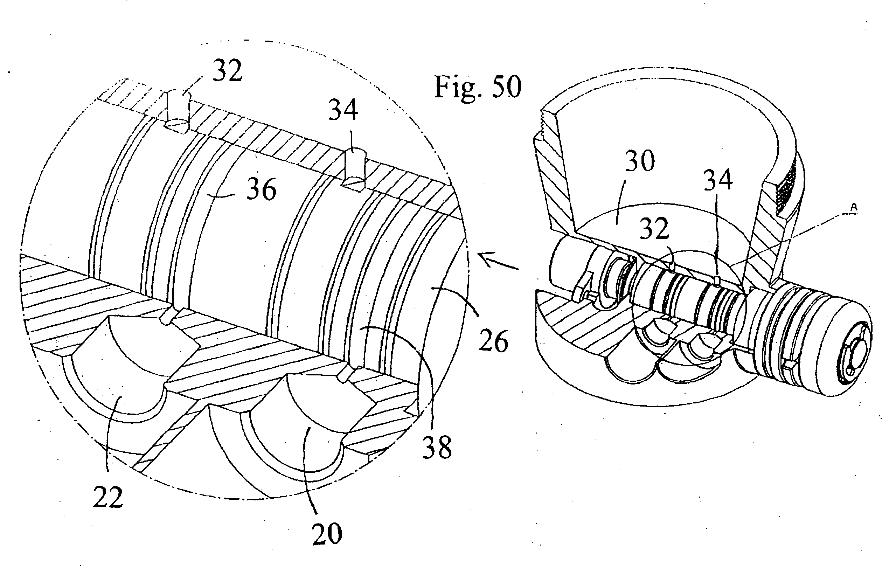

Die Figuren 50 bis 56 zeigen verschiedene Stellungen der Gestaltung gemäß Fig. 1 bzw. Fig. 2, wobei jeweils eine Schnittansicht und ein vergrößerter Ausschnitt aus dieser jeweiligen Schnittansicht gezeigt ist.

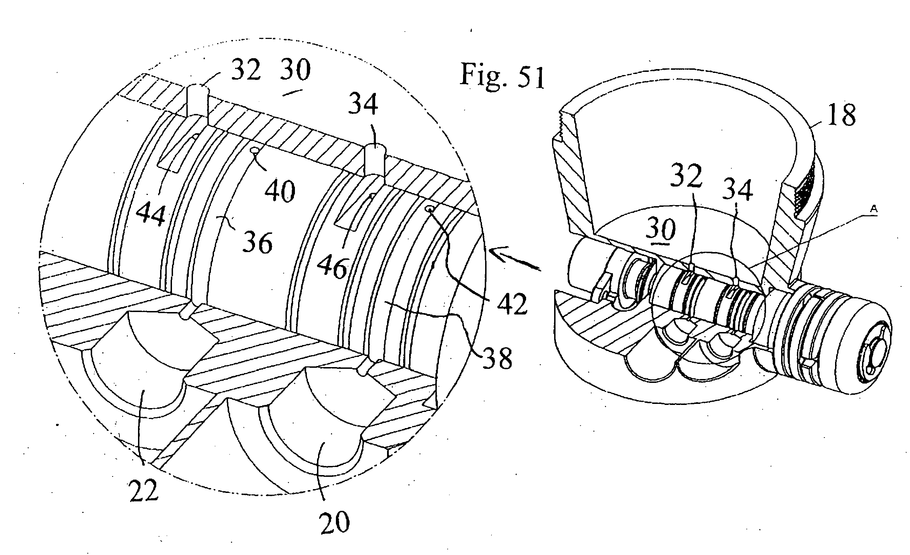

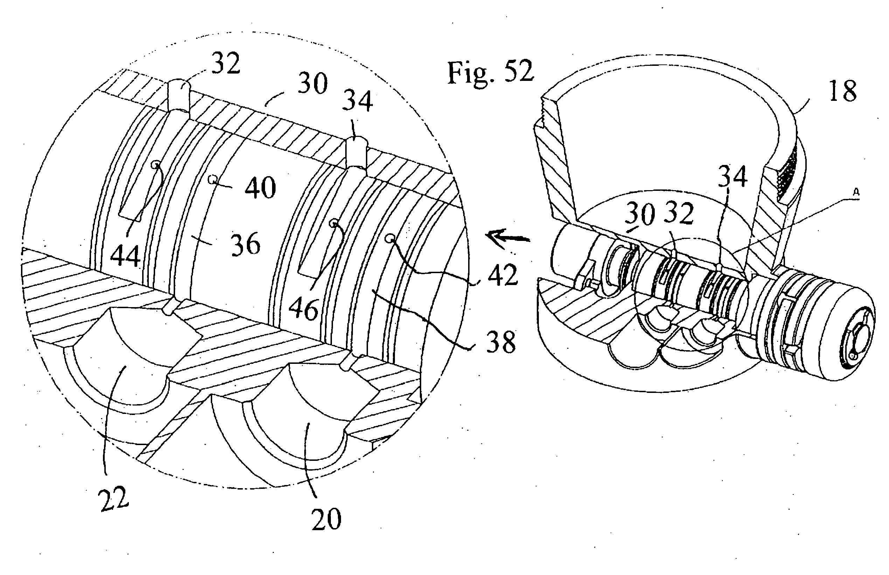

Fig. 50 zeigt die Stellung "HV unten"; Fig. 51 zeigt die Stellung "HV Mitte"; Fig. 52 zeigt die Stellung "HV oben".

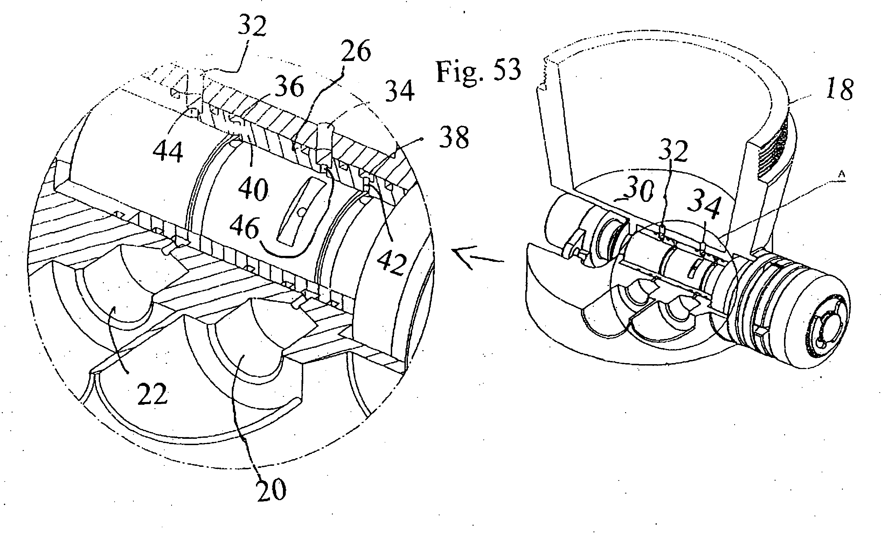

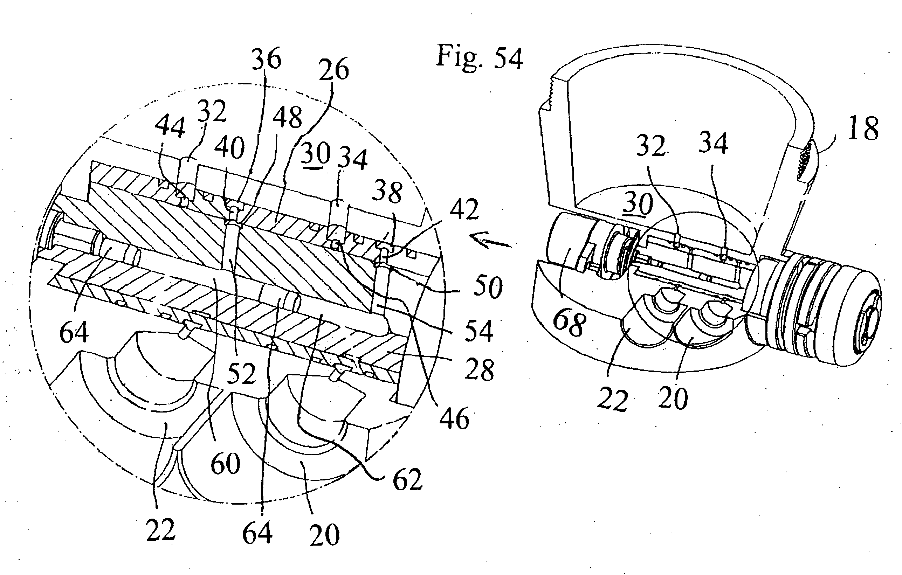

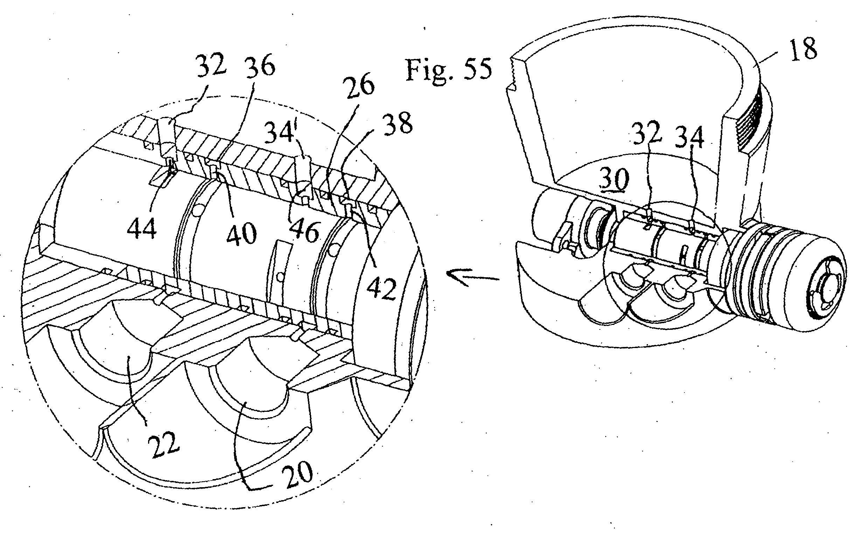

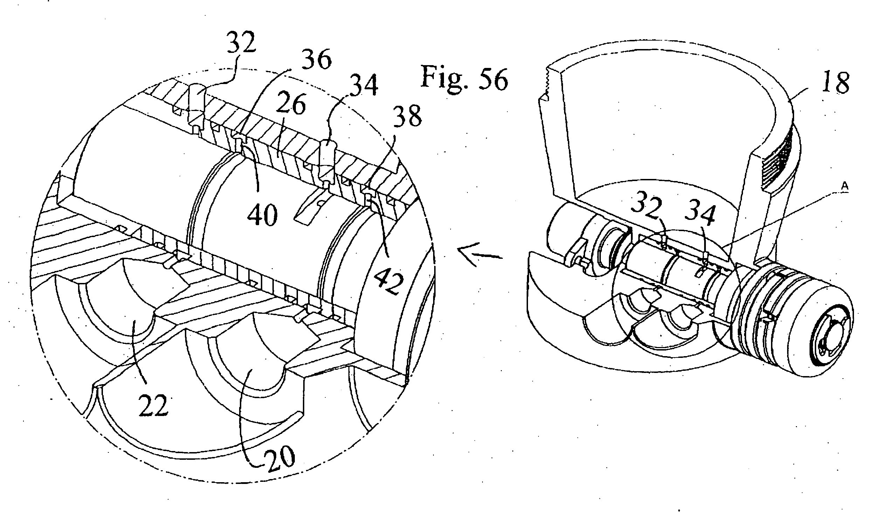

Fig. 53 zeigt die Stellung "Niveau o.K" (geschlossen); Fig. 54 zeigt die Stellung "in Ordnung / HV-Mitte"; Fig. 55 zeigt die Stellung "Niveau zu hoch" (Abluft geöffnet); und Fig. 56 zeigt die Stellung "Niveau zu tief" (Zuluft geöffnet).

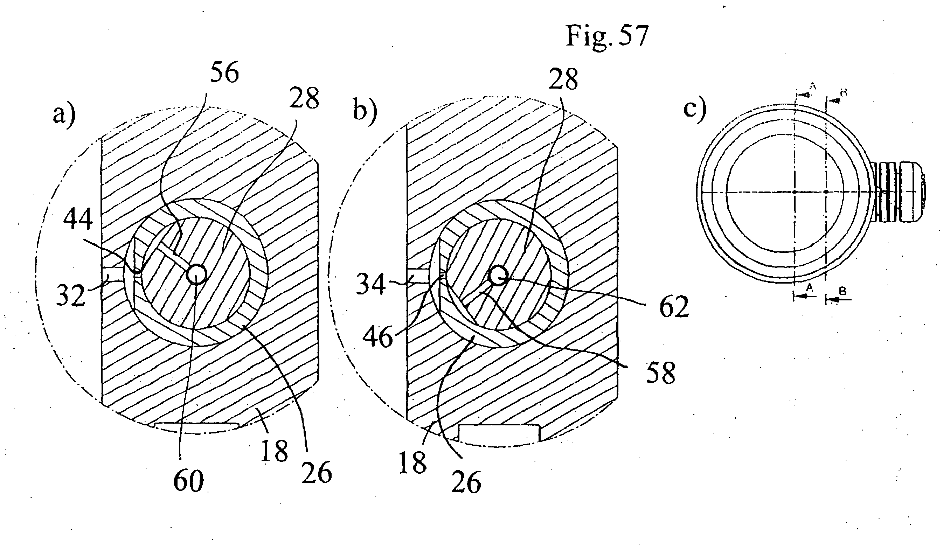

Fig. 57 a) - c) zeigt eine weitere Ansicht der erfindungsgemäßen Gestaltung mit zwei Schnitten die eine Stellung der erfindungsgemäßen Gestaltung verdeutlichen.

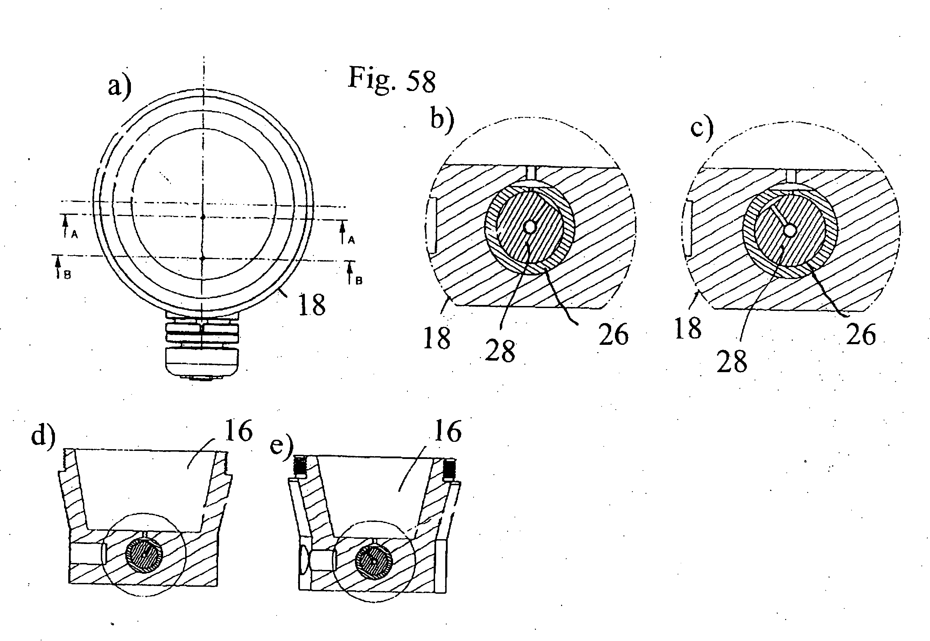

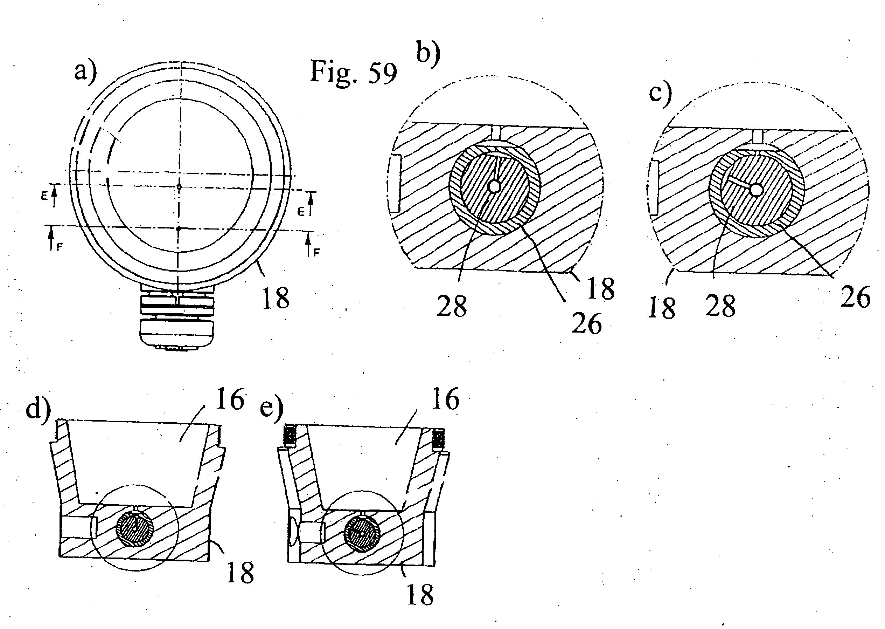

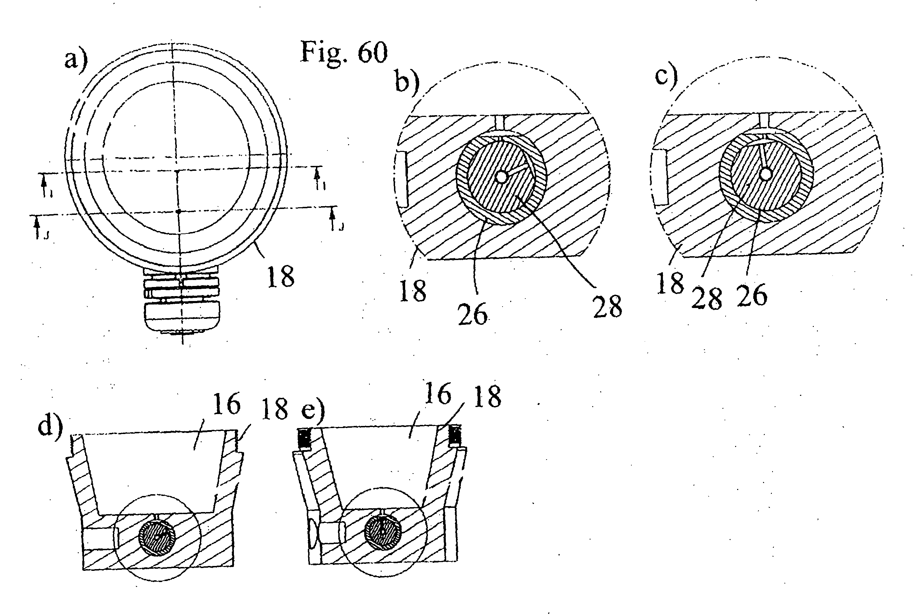

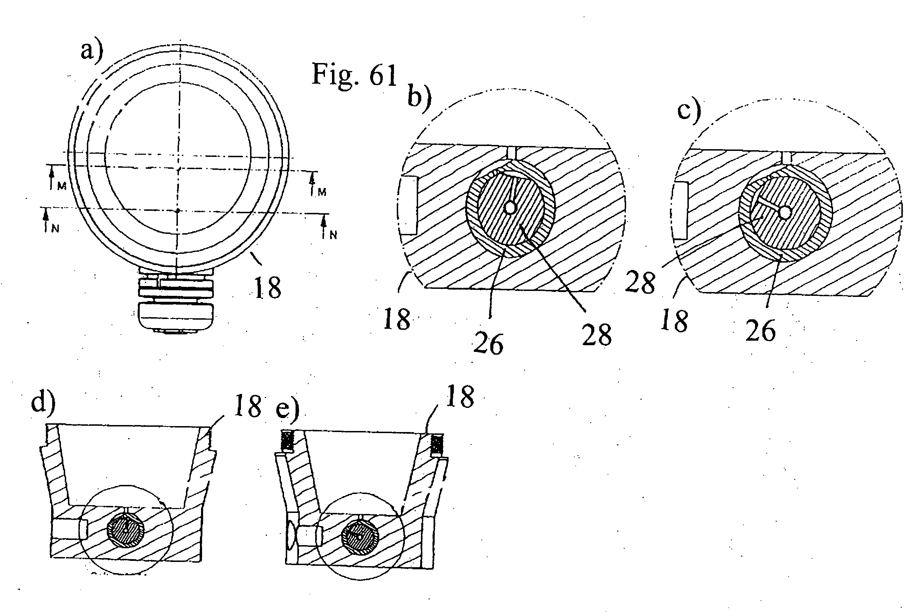

Fig. 58 a) - e), Fig. 59 a) - e), Fig. 60 a) - e), Fig. 61 a) - e) und Fig. 62 a) - e) zeigen verschiedene Stellungen der Gestaltung gemäß Fig. 1 bzw. gemäß Fig. 2.

Fig. 58 a) - e) zeigt eine Stellung, bei der die Höhenverstellung ihre Position "Mitte" hat, das Niveau neutral ist, und demzufolge die Zuluft geschlossen und die Abluft geschlossen ist.

Fig. 59 a) - e) zeigt eine Stellung, bei der die Höhenverstellung ihre Position "Mitte" hat, das Niveau zu tief ist, und demzufolge die Zuluft geöffnet und die Abluft geschlossen ist.

Fig. 60 a) - e) zeigt eine Stellung, bei der die Höhenverstellung ihre Position "Mitte" hat, das Niveau zu hoch ist, und demzufolge die Zuluft geschlossen und die Abluft geöffnet ist.

Fig. 61 a) - e) zeigt eine Stellung, bei der die Höhenverstellung ihre Position "Unten" hat, das Niveau neutral ist, und demzufolge die Zuluft geschlossen und die Abluft geschlossen ist.

Fig. 62 a) - e) zeigt eine Stellung, bei der die Höhenverstellung ihre Position "Oben" hat, das Niveau neutral ist, und demzufolge die Zuluft geschlossen und die Abluft geschlossen ist.

Die Freiläufe können auch mittels Zugfedern gestaltet sein.

Wie insbesondere die Ausführungsbeispielezeigen, reduziert die Erfindung die eingangsgenannten (dort vier) Baugruppen auf zwei Baugruppen, nämlich die Luftfeder mit integrierter Steuereinheit (Niveau-Steuereinheit und Höhensteuereinheit) und die Versorgungsleitung (Netz).

Hierbei ist die komplette Steuereinheit bestehend aus Höhenverstellung und Niveauregulierung in den Luftfederkolben integriert.

Die Betätigung der Niveausteuereinheit erfolgt, ähnlich wie bei anderen bekannten Systemen, durch eine direkte Verbindung, wie z.B. Schubstange, Zahnstange o. ä. der Schwinge/Schere.

Die Anregung der Steuerung erfolgt durch die Vertikalbewegung der Federung (des Führungssystems) im Fahrersitz, in diesem Fall dargestellt als X-förmig ausgebildete Schere.

Die Höhenverstellung des Federungssystems wird über das Verdrehen der Höhensteuerwalze, welche mit einem Bowdenzug o. ä. mit z.B. einem Handrad verbunden ist, vorgenommen.

Die Niveausteuerwalze ist zusätzlich mit einem Frequenzregler ausgestattet, um ab einer Frequenz von ca. > 0,5 Hz ein permanentes Regeln durch Zu- und Abführen von Zuluft zu unterbinden.

Die in den Fig. eingetragenen Maßstabs- und Maßangaben sind rein beispielhafter Natur und können auch anders gewählt werden. Die Anmelderin behält sich vor, die Figuren so zu ändern, dass diese Angaben ganz oder teilweise entfallen. Die Anmelderin behält sich aber auch vor Ansprüche unter Berücksichtigung einzelner oder mehrerer der aus den Figuren ersichtlichen Maße und/oder Verhältnisse zu formulieren.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Luftfeder
- 10: Mitnehmer
- 12: Ventilhebel
- 14: Antriebsrad
- 16: Luftfederkammer
- 18: Luftfeder-Bauteil bzw. Kolbenunterteil bzw. Zylinderunterteil
- 20: Zuluftanschluss
- 22: Abluftanschluss
- 24: Durchgangskanal
- 26: HV-Modul bzw. Höhensteuerwalze
- 28: Niveausteuerung bzw. Niveausteuerwalze
- 30: Boden von 18
- 32: erste Durchgangsöffnung in 18
- 34: zweite Durchgangsöffnung in 18
- 36: erster Ringkanal in 26 für Abluft in 26
- 38: zweiter Ringkanal in 26 für Zuluft in 26
- 40: dritte Durchgangsöffnung in 26
- 42: vierte Durchgangsöffnung in 26
- 44: fünfte Durchgangsöffnung in 26
- 46: sechste Durchgangsöffnung in 26
- 48: dritter Ringkanal in 28
- 50: vierter Ringkanal in 28
- 52: siebte Durchgangsöffnung in 28
- 54: achte Durchgangsöffnung in 28
- 56: neunte Durchgangsöffnung in 28
- 58: zehnte Durchgangsöffnung in 28
- 60: Abluftkammer
- 62: Zuluftkammer
- 64: Stopfen
- 66: HV-Hebel
- 68: Dämpfer bzw. Frequenzregler bzw. "Honigmotor"
- 70: Mitnehmer
- 72: Ventilhebel
- 74: zentraler Vorsprung von 70
- 76: axialer Vorsprung von 70
- 78: Steg von 72
- 80: Schlitz in 72
- 82: Antriebsrad

## Patentansprüche

1. Luftfeder für einen Fahrzeugsitz, welche Luftfeder mehrere wenigstens eine Luftfederkammer begrenzende Luftfeder-Bauteile (18) aufweist, wobei die Luftfeder zur Höhen- und/oder Niveausteuerung des Fahrzeugsitzes einen Zuluftanschluss (20) und einen Abluftanschluss (22) ausbildet, wobei die Luftfeder zur Höhen- und/oder Niveausteuerung des Fahrzeugsitzes ferner eine Ventileinrichtung (26, 28) aufweist, die in wenigstens einem Luftfeder-Bauteil (18) integriert ist,
**dadurch gekennzeichnet, dass**
das Luftfeder-Bauteil (18) einen Durchgangskanal (24) aufweist, in den der Zuluftanschluss (20) sowie der Abluftanschluss (22) münden.

2. Luftfeder nach Anspruch 1,
**dadurch gekennzeichnet, dass**
sich in dem Durchgangskanal (24) eine Höhensteuerwalze (26) erstreckt.

3. Luftfeder nach Anspruch 2,
**dadurch gekennzeichnet, dass**
die Höhensteuerwalze (26) hohlzylindrisch ist und sich eine Niveausteuerwalze (28) in der Höhensteuerwalze (26) erstreckt.

4. Luftfeder nach einem der Ansprüche 2 und 3,
**dadurch gekennzeichnet, dass**
der Durchgangskanal (24) sich quer, insbesondere senkrecht, zur zentralen Achse des Zuluftanschlusses (20) und/oder des Abluftanschlusses (22) erstreckt.

5. Luftfeder nach einem der vorangehenden Ansprüche,
**dadurch gekennzeichnet, dass**
ein integrierter Freilauf ausgebildet wird.

6. Luftfeder nach einem der Ansprüche 1 bis 4,
**dadurch gekennzeichnet, dass**
ein externer Freilauf gegeben ist.

7. Fahrzeugsitz mit einer Luftfeder gemäß einem der vorangehenden Ansprüche.

8. Fahrzeugsitz nach Anspruch 7,
**dadurch gekennzeichnet, dass**
zwischen dem Sitzbereich des Fahrzeugsitzes und der Ventileinrichtung ein Scherensystem vorgesehen ist, mittels welchem die Ventileinrichtung betätigt wird.

## Claims

1. An air spring for a vehicle seat, which air spring comprises a plurality of air spring components (18) which delimit at least one air spring chamber, wherein the air spring forms an intake air connection (20) and a discharged air connection (22) for controlling the height and/or level of the vehicle seat, wherein the air spring furthermore comprises, for controlling the height and/or level of the vehicle seat, a valve device (26, 28) which is integrated in at least one air spring component (18), **characterised in that** the air spring component (18) forms a through-channel (24) into which the intake air connection (20) and the discharged air connection (22) open.

2. An air spring according to claim 1, **characterised in that** a height control roller (26) extends in a through-channel (24).

3. An air spring according to claim 2, **characterised in that** the height control roller (26) is hollow-cylindrical and a level control roller (28) extends inside the height control roller (26).

4. An air spring according to one of claims 2 and 3, **characterised in that** the through-channel (24) extends transversely, in particular perpendicularly, to the central axis of the intake air connection (20) and/or of the discharged air connection (22).

5. An air spring according to one of the preceding claims, **characterised in that** an integrated free wheel is provided.

6. An air spring according to one of claims 1 to 4, **characterised in that** an external free wheel is provided.

7. A vehicle seat comprising an air spring according to one of the preceding claims.

8. A vehicle seat according to claim 7, **characterised in that** a scissors-type system is provided between the sitting area of the vehicle seat and the valve device, by means of which scissors-type system the valve device is actuated.

## Revendications

1. Ressort pneumatique pour siège de véhicule, lequel ressort pneumatique présente plusieurs composants de ressort pneumatique (18) délimitant au moins une chambre de ressort pneumatique, le ressort pneumatique formant un raccord d'admission d'air (20) et un raccord d'évacuation d'air (22) pour la commande de hauteur et/ou de niveau du siège du véhicule, le ressort pneumatique présentant en outre pour la commande de hauteur et/ou de niveau du siège de véhicule un dispositif à soupape (26, 28) intégré à au moins un composant (18) du ressort pneumatique,
**caractérisé en ce que**
le composant de ressort pneumatique (18) présente un canal de passage (24), dans lequel débouchent le raccord d'admission d'air (20) et le raccord d'évacuation d'air (22).

2. Ressort pneumatique selon la revendication 1,
**caractérisé en ce que**
un cylindre de commande de hauteur (26) s'étend dans le canal de passage (24).

3. Ressort pneumatique selon la revendication 2,
**caractérisé en ce que**
le cylindre de commande de hauteur (26) est un cylindre creux et en qu' un cylindre de commande de niveau (28) s'étend dans le cylindre de commande de hauteur (26).

4. Ressort pneumatique selon l'une quelconque des revendications 2 ou 3,
**caractérisé en ce que**
le canal de passage (24) s'étend transversalement, en particulier perpendiculairement, à l'axe central du raccord d'admission d'air (20) et/ou du raccord d'évacuation d'air (22).

5. Ressort pneumatique selon l'une quelconque des revendications précédentes,
**caractérisé en ce**
**qu'**il forme
un système à roue libre intégré.

6. Ressort pneumatique selon l'une quelconque des revendications 1 à 4,
**caractérisé en ce qu'**
un système de roue libre externe est présente.

7. Siège de véhicule comprenant un ressort pneumatique selon l'une quelconque des revendications précédentes.

8. Siège de véhicule selon la revendication 7,
**caractérisé en ce que**,
entre la zone d'assise du siège du véhicule et le dispositif à soupape, il est prévu un système en ciseaux, au moyen duquel est actionné le dispositif à soupape.
